# FASCICULE DE BREVET EUROPEEN

(11) **EP 2 429 328 B1**
(45) Date de publication et mention de la délivrance du brevet: **06.03.2013**
(21) Numéro de dépôt: 10723168.0
(22) Date de dépôt: 30.04.2010
(51) Int. Cl.: A44B 18/00

(54) **ELEMENT D'ACCROCHAGE POUR FORMER LA PARTIE MALE D'UN AUTO-AGRIPPANT**
VERBINDUNGSELEMENT ZUM BILDEN DES STECKABSCHNITTS EINER AUTOMATISCHEN BEFESTIGUNGSVORRICHTUNG
CONNECTION ELEMENT FOR FORMING THE MALE PORTION OF AN AUTOMATIC FASTENER

(30) Priorité: 15.05.2009 FR 0902358
(43) Date de publication de la demande: 21.03.2012
(73) Titulaire: Aplix, 75008 Paris (FR)
(72) Inventeur: PICOT, Lionel, F-49270 St Laurent des Autels (FR); DUCAUCHUIS, Jean-Pierre, F-44100 Nantes (FR)
(74) Mandataire: Eidelsberg, Olivier Nathan
(86) Numéro de dépôt international: PCT/FR2010/000339
(87) Numéro de publication internationale: WO 2010/130886

(56) Documents cités:
- US-A1- 2003 106 188

## Description

La présente invention se rapporte à une nappe à éléments d'accrochage destinée à former la partie mâle d'un auto-agrippant du type à crochets et boucles (mâle - femelle), qui est constituée d'une nappe, notamment en matière thermoplastique, de laquelle font saillie des éléments d'accrochage comportant une tige s'étendant transversalement, notamment sensiblement perpendiculairement, par rapport à la nappe et terminée par une tête qui fait saillie latéralement de la tige.

La présente invention se rapporte également à un procédé de fabrication d'une nappe de ce genre ainsi qu'à une installation de fabrication d'une nappe de ce genre.

On connaît déjà dans l'art antérieur, pour fabriquer des nappes à crochets en forme de champignon, c'est-à-dire constituées d'une bande en matière thermoplastique de laquelle font saillie des éléments d'accrochage en forme de champignon constitués chacun d'une tige sensiblement perpendiculaire à la nappe et d'une partie de tête qui fait saillie latéralement de la tige tout autour de celle-ci, le fait d'extruder une matière thermoplastique d'une extrudeuse pour former et convoyer une nappe, sensiblement sous une forme que par la suite on appellera fondue et qui, sans être liquide, n'est cependant pas complètement solide mais est en partie ramollie, entre un rouleau de pressage et un rouleau de formage, le rouleau de formage comportant des cavités ayant la forme complémentaire de tiges, de sorte que lorsque la nappe est passée entre les deux rouleaux, on obtient en sortie, après solidification de la matière, une nappe comportant des tiges sensiblement cylindriques ou coniques, dont on déforme ensuite par pressage et/ou chauffage la partie supérieure pour former une tête d'accrochage en forme de champignon.

Ces éléments d'accrochage issus de la nappe sont destinés à coopérer avec des boucles d'une partie à boucles constituée, par exemple, d'un tissu (tricot ou tissé) à boucles, notamment réalisé sur un métier à trois barres comportant des fils de chaîne, des fils de trame et des fils de boucle, ou d'un non-tissé formant des boucles. Un example de nappe à crochets est connu de

US 2003/106 188.

On souhaite avoir à disposition des éléments d'accrochage qui, lorsqu'ils coopèrent avec des parties à boucles, ont une résistance à la traction et/ou au pelage qui soit la plus grande possible.

On entend dans la présente demande par angle de prononciation d'accrochage de la courbure de la surface inférieure de la tête dans un demi plan de coupe longitudinal radial (par rapport à l'axe longitudinal médian de la tige, notamment l'axe vertical passant par le centre de la tige) donné, ou angle d'accrochage gauche, respectivement droit, l'angle α formé dans le demi plan de coupe longitudinale radial donné entre d'une part l'axe perpendiculaire (classiquement l'horizontale) à l'axe longitudinal de la tige (classiquement la verticale) et la droite passant par les deux points Ph et Pb du plan radial donné définis comme étant respectivement, pour Pb, le point de la tête le plus éloigné de la tige dans ce demi plan radial, et Ph, le premier point de la surface inférieure de la tête de l'élément d'accrochage, en partant de la tige et en allant vers le point Pb, où la tangente à cette surface inférieure est la moins inclinée (en valeur absolue) par rapport audit axe perpendiculaire (classiquement l'horizontale), notamment est parallèle à celui ci. En particulier, lorsque la surface inférieure comporte un point le plus élevé qui est autre que le point Pb le plus éloigné de la tige, c'est en ce point que la tangente est la moins inclinée et notamment est parallèle à l'axe perpendiculaire, qui est classiquement l'horizontale.

Lorsque la droite PhPb est inclinée vers le bas par rapport à l'axe perpendiculaire (classiquement l'horizontale) à l'axe longitudinal de la tige l'angle d'accrochage est positif et lorsqu'elle est inclinée vers le haut l'angle est négatif.

Suivant l'invention, une nappe à éléments d'accrochage, comportant une bande de base, notamment en matière thermoplastique, et au moins un élément d'accrochage issu de la bande, l'élément d'accrochage étant constitué d'une partie de tige et d'une partie de tête faisant saillie latéralement de la tige, la tête comportant deux ailes gauche et droite faisant saillie latéralement de la tige dans une direction transversale, ou CD, en ayant respectivement un angle d'accrochage le plus grand gauche et droit ; et d'autre part, radialement entre les deux ailes, une partie arrière en avancée faisant saillie de la tige du côté arrière dans une direction MD perpendiculaire à la direction CD en ayant un angle d'accrochage le plus grand arrière, est caractérisée en ce que les deux angles d'accrochage le plus grand gauche et droit sont supérieurs à l'angle d'accrochage le plus grand arrière.

Ainsi suivant l'invention, la tête a une forme qui s'avère entraîner des avantages en terme de coopération de l'élément d'accrochage avec des boucles, celles ci pouvant venir suivant certains « axes d'approche » facilement s'accrocher, et étant ensuite mieux maintenues par les parties à plus grand prononcé.

De préférence, les angles d'accrochage le plus grand gauche et droit sont strictement positifs tandis que l'angle d'accrochage le plus arrière est nul ou inférieur à zéro.

De préférence, la tête, sur une partie avant, c'est à dire du côté opposé à la partie en avancée ne fait pas saillie latéralement de la tige.

Suivant un autre mode de réalisation, sur la partie avant, la tête fait également saillie de la tige, de sorte que la tête fait saillie de la tige sur 360°, et l'élément d'accrochage est alors un champignon.

Suivant un mode de réalisation préféré de l'invention, en coupe longitudinale dans la direction CD, les deux ailes gauche et droite sont sensiblement symétriques par rapport au plan longitudinal MD central.

Suivant un mode de réalisation préféré de l'invention, la distance de laquelle chaque aile fait saillie d'un côté gauche ou droit dans la direction transversale augmente, au fur à mesure depuis le côté avant en allant dans la direction vers le côté arrière et ce jusqu'à un point intermédiaire le plus éloigné de la tige.

De préférence, la tige a une forme en section transversale polygonale, notamment sensiblement rectangulaire ou carrée, de préférence en ayant un rapport de la plus grande dimension en longueur sur la plus grande dimension en largeur qui est compris entre 1 et 2 strictement, la dimension en longueur s'étendant de référence dans la direction MD.

Suivant un mode de réalisation préféré, la tête comporte deux excroissances en forme de nervures qui s'étendent à partir des arêtes de la tige formées par ses coins arrières jusqu'au bord extérieur de la tête, notamment jusqu'aux points du bord extérieur où se rejoignent les ailes respectivement gauche ou droite et la partie arrière en avancée.

De préférence, chaque nervure a une crête en continuité avec l'arête respective de la tige à partir de laquelle elle s'étend.

De préférence, le plan de délimitation entre la tête et la tige est incliné vers le bas dans la direction vers l'arrière par rapport au plan de la base.

De préférence, du côté opposé à la partie arrière en avancée, la surface supérieure de la tête comporte une région concave dont la concavité est tournée dans une direction qui s'éloigne de l'élément d'accrochage, cette région concave étant délimitée à l'arrière par une ligne de crête et vers l'avant par le plan de délimitation tige-tête.

De préférence, la ligne de crête comporte deux points sommet droit et gauche qui sont les deux points les plus élevés de la tête respectivement à droite et à gauche de l'axe avant - arrière de la tête passant par l'axe de la tige.

De préférence, les deux points sommets sont plus proches du bord avant que du bord arrière.

Ces deux points sommet ont pour fonction de guider les boucles de manière optimales soit pour les dévier vers l'élément d'accrochage suivant du côté opposé à la partie en avancée, soit pour les dévier vers les ailes, pour ainsi favoriser un accrochage le meilleur possible des boucles.

La présente invention se rapporte également à un procédé pour fabriquer une nappe à éléments d'accrochage, notamment une nappe à éléments d'accrochage suivant l'invention.

Suivant l'invention, un procédé pour fabriquer une nappe à éléments d'accrochage comporte les étapes dans lesquelles :
on convoie une nappe à préformes comportant une bande de base et au moins une préforme faisant saillie transversalement, notamment sensiblement perpendiculairement, de la nappe, la au moins une préforme étant par exemple une ou des tiges cylindriques carrées ou rectangulaires et/ou coniques ;
on fait passer cette nappe à préformes dans un interstice formé entre une surface de support incurvée ou droite d'un élément de support, notamment un rouleau de support, le support étant tel que la nappe est en contact avec la surface de support par son côté sans préforme, et une surface de pressage incurvée ou droite d'un élément de pressage, les concavités des deux surfaces de support et de pressage étant tournées dans la même direction, l'interstice ayant une épaisseur d'entrée et une épaisseur de sortie inférieure à l'épaisseur d'entrée, l'élément de support entraînant la nappe à préforme à une vitesse d'entraînement tandis que la surface de pressage est fixe ou se déplace à une vitesse inférieure à la vitesse d'entraînement ;
la hauteur totale constituée de la somme de l'épaisseur de la bande de base et de la hauteur de chaque préforme étant supérieure à l'épaisseur en un point situé entre l'entrée et la sortie, ce point pouvant être l'entrée, et l'épaisseur de l'interstice étant décroissante de ce point vers la sortie, notamment jusqu'à la sortie, de sorte que les préformes sont déformées par compression croissante vers la sortie pour ainsi obtenir une nappe à éléments d'accrochage.

Suivant un premier mode de réalisation préféré, l'élément de support est un rouleau et l'élément de pressage a une surface cylindrique circulaire dont la concavité est tournée vers l'élément de support, l'agencement des deux éléments étant tel que l'interstice formé entre les deux décroît de l'entrée à la sortie de l'interstice.

Suivant un mode de réalisation préféré de l'invention, l'un des éléments est maintenu à température ambiant, tandis que l'autre élément est chauffé, notamment à une température de ramollissement (c'est à dire au delà de la limite de la déformation élastique)comprise entre 100°C et 165°C, notamment lorsque la matière thermoplastique est un polyoléfine, par exemple un PE (Polyéthylène)ou un PP (polypropylène) ou un copolymère.

De préférence, l'élément maintenu à température ambiante est l'élément de support, c'est-à-dire l'élément du côté de la nappe opposé aux tiges, tandis que l'élément chauffé est l'élément de pressage.

De préférence, la préforme est constituée d'une tige et d'une tête faisant saillie de la tige dans la direction à l'avant de la nappe, et à la sortie de l'interstice décroissant, après déformation de la tête par la surface chaude de pressage et par le frottement engendré, on obtient des éléments d'accrochage comme suivant l'invention ayant une partie en avancée dans la direction à l'arrière de la nappe, c'est à dire du côté opposé par rapport à la tête de la préforme et notamment du côté opposé au sens de défilement du produit.

On obtient ainsi un élément d'accrochage ayant un surplomb et/ou un prononcé dissymétrique, notamment comme suivant l'invention.

De préférence, la nappe à préformes convoyée dans l'interstice est obtenue en convoyant une nappe à tiges comportant une bande de base et des tiges faisant saillie transversalement, notamment sensiblement perpendiculairement, de la nappe en étant notamment de forme cylindrique, notamment polygonale, notamment carrée ou rectangulaire et/ou conique, entre un élément de support préalable, notamment un rouleau de support préalable, et un élément de pressage préalable, notamment un rouleau de pressage préalable;
un interstice préalable étant formé entre les deux éléments préalables de support et de pressage de sorte que les tiges sont comprimées par l'élément de pressage préalable contre l'élément de support préalable de sorte qu'à la sortie de l'interstice préalable on obtient ladite nappe à préformes comportant une nappe et des préformes qui ont à leur extrémité une partie de tête qui fait saillie latéralement, la hauteur des préformes étant inférieure à la hauteur des tiges en amont de l'interstice préalable entre les deux éléments de support et de pressage préalables;
l'élément de support préalable se déplaçant à une première vitesse (V₁) mesurée dans la direction de convoyage de la nappe au niveau de l'interstice préalable et l'élément de pressage préalable se déplaçant à une deuxième vitesse (V₂) mesurée dans la direction de convoyage de la nappe au niveau de l'interstice préalable, les deux vitesses étant différentes l'une de l'autre, notamment en valeurs absolues.

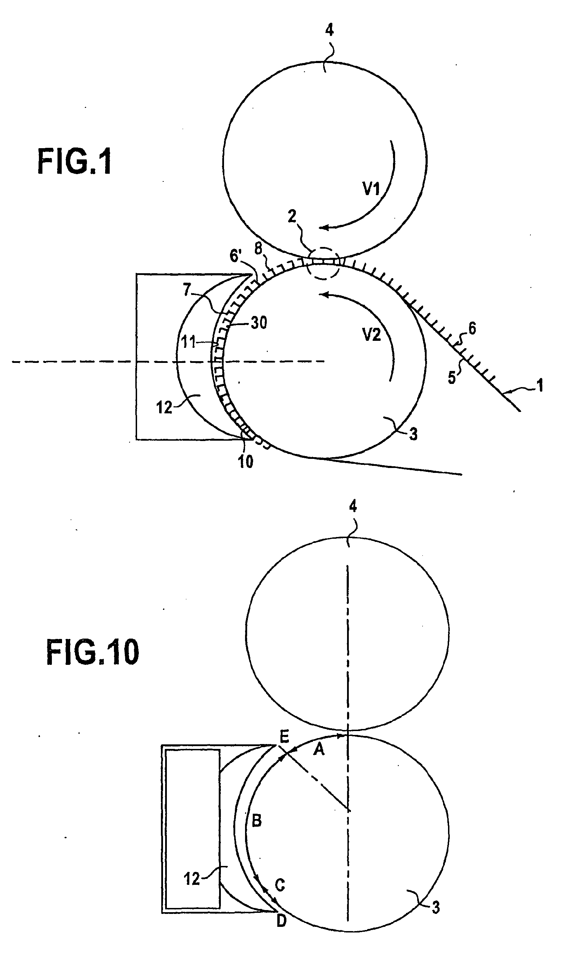

Si la vitesse de l'élément ou du rouleau de pressage préalable est supérieure à la vitesse de l'élément ou du rouleau de support préalable, on obtient pour les préformes une forme dite en casquette avec surplomb à l'avant de la tige dans la direction machine (cas représenté à la figure 1), tandis que dans le cas inverse, on obtient la forme en surplomb dite en casquette à l'arrière de la tige dans la direction machine.

De préférence, l'élément de support préalable et l'élément de support sont formés par le même élément, en particulier il s'agit d'un rouleau dont un tronçon sert de rouleau de support préalable et un autre tronçon de rouleau de support.

De préférence, les deux éléments de support et de pressage préalables sont des rouleaux qui ont un rayon identique et leurs centres sont disposés sur une perpendiculaire par rapport à la nappe qui défile.

De préférence, il est prévu un rouleau de renvoi avant l'interstice préalable.

La présente invention se rapporte également à une installation de fabrication d'une nappe à éléments d'accrochage, notamment suivant l'invention.

Suivant l'invention, l'installation destinée à fabriquer une nappe à éléments d'accrochage comporte un élément de support, notamment un rouleau, ayant une surface de support incurvée ou droite et un élément de pressage ayant une surface de pressage incurvée ou droite, les deux surfaces de support et de pressage étant disposées en ayant leur concavité tournée dans la même direction et de manière à former un interstice entre elles, et des moyens destinés à convoyer une nappe à préformes pour la faire passer dans l'interstice entre les deux éléments de sorte que la nappe soit supportée par son côté sans préforme, l'interstice s'étendant entre une entrée et une sortie, et au moins sur un tronçon, de préférence entre l'entrée et la sortie, l'épaisseur de l'interstice est décroissante vers la sortie ; l'élément de support entraînant la nappe à une vitesse d'entraînement tandis que la surface de pressage étant fixe ou se déplaçant à une vitesse inférieure à la vitesse d'entraînement.

Suivant un mode de réalisation préféré, l'élément de support est un rouleau et l'élément de pressage comporte une surface de pressage incurvée en ayant sa concavité tournée vers le rouleau de support, cette surface étant notamment constitué en coupe d'un arc de cercle.

Suivant un mode de réalisation préféré, il est prévu en amont un élément de support préalable, notamment un rouleau de support préalable, et un élément de pressage préalable, notamment un rouleau de pressage préalable, un interstice préalable étant formé entre les deux éléments préalables, et l'élément de pressage préalable ayant une première vitesse V1 de déplacement au niveau de l'interstice préalable, mesurée dans la direction de convoyage, et l'élément de support préalable a une deuxième vitesse V2 de déplacement au niveau de l'interstice préalable, mesurée dans la direction de convoyage, qui est différente de la vitesse V₁.

De préférence, l'élément de pressage préalable est chauffé à une température supérieure à la température de l'élément de support préalable, notamment à une température de ramollissement comprise entre 100° et 165° dans le cas où la matière thermoplastique est une polyoléfine, par exemple un PE ou un PP ou un copolymère, et l'élément de support est à une température sensiblement ambiante, notamment comprise entre 20° et 40°C.

De préférence, l'élément de support préalable est un rouleau et l'élément de support est constitué par le même rouleau, un secteur du rouleau formant l'élément de support préalable tandis qu'un autre secteur du rouleau formant l'élément de support.

De préférence l'élément de pressage est porté à une température comprise entre 100° C et 160°C.

On décrit maintenant à titre d'exemple un mode de réalisation d'un dispositif suivant l'invention et des nappes à tiges obtenues suivant l'invention en se reportant aux dessins, dans lesquels :
la figure 1 est une vue schématique d'une installation suivant l'invention dans laquelle est représentée également la nappe à éléments d'accrochage convoyée;
la figure 2 est une vue suivant une coupe longitudinale médiane d'une partie d'une nappe à préformes avant son entrée dans l'interstice à épaisseur décroissante;
la figure 3 est une vue de dessus (suivant la ligne III de la figure 2) de la nappe à préformes de la figure 2 ;
la figure 4 est une vue en coupe transversale suivant la ligne IV-IV de la figure 2, cette ligne passant sensiblement par la l'axe central de la tige;
la figure 5 est une vue suivant une coupe longitudinale d'une partie d'une nappe à éléments d'accrochage obtenue à la sortie de l'interstice à épaisseur décroissante ;
la figure 6 est une vue en coupe suivant la ligne VI-VI de la figure 5, cette ligne passant sensiblement par l'axe central de la tige ;
la figure 7 est une vue de dessus (suivant la ligne VII de la figure 5) de la partie de nappe de la figure 5 ;
la figure 8 est une vue identique à la figure 7 à plus grande échelle représentant le cercle circonscrit par la tête et les angles A, B et C;
la figure 9 est la vue de la figure 7 à plus grande échelle ;
la figure 10 est une vue de l'installation de la figure 1 sans la nappe convoyée :
la figure 11 est une vue en perspective avant de l'élément d'accrochage des figures 5 à 7;
la figure 12 est une vue de côté (CD) de l'élément d'accrochage de la figure 11 ;
la figure 13 est une vue en perspective arrière de dessous de l'élément d'accrochage des figures 11 et 12 ;
la figure 14 est une vue en perspective frontale de dessous de l'élément d'accrochage des figures 11 à 13 ; et

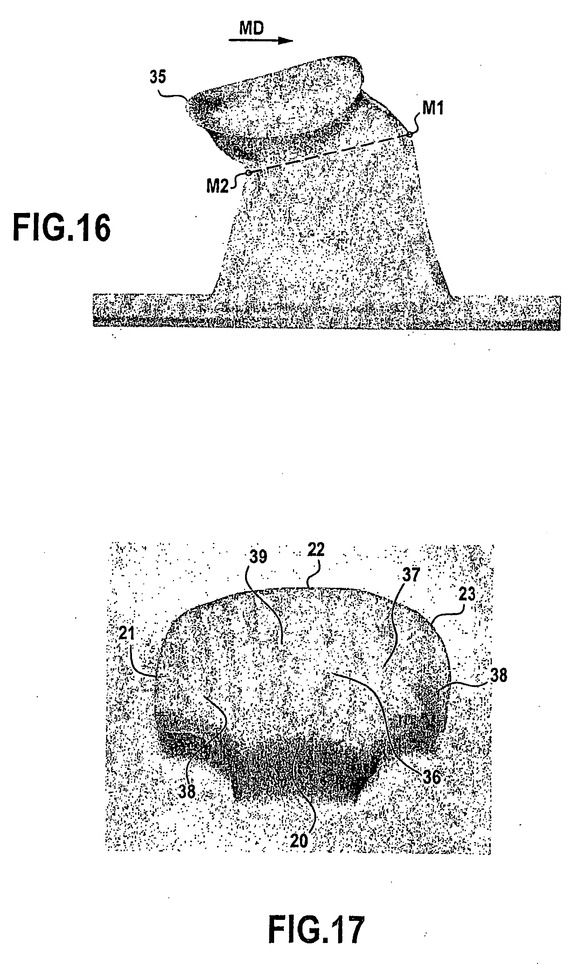

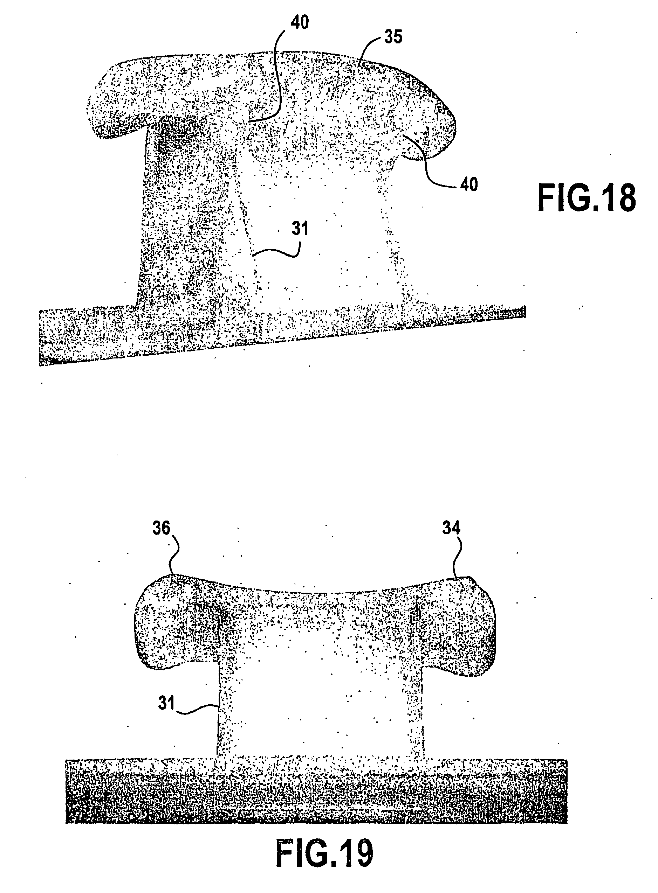

les figures 15 à 19 sont des reproductions photographiques de l'élément d'accrochage représenté schématiquement aux figures 5 à 7 et 11 à 14.

A la figure 1, il est représenté schématiquement un installation pour fabriquer une nappe à éléments d'accrochage.

Une nappe 1 à tiges cylindriques, par exemple de sections transversales polygonales, par exemple carrées ou rectangulaires, ou elliptiques, notamment circulaires, ou analogues et/ou coniques est convoyée à partir d'un dispositif de formation de nappes à tiges non représenté qui comporte, classiquement, un rouleau de formage, comportant des cavités de formes complémentaires des tiges que l'on souhaite former, et un rouleau de pression, rouleaux à distance l'un de l'autre pour former un interstice dans lequel on apporte par extrusion une matière thermoplastique sous la forme d'une nappe de matière ni totalement durcie ni liquide pour comprimer la matière dans les cavité de formage, de sorte qu'à la sortie on obtient par moulage dans les cavités la nappe 1 à tiges avec des tiges de forme complémentaire des cavités, notamment de forme cylindrique, par exemple polygonale, notamment carrée ou rectangulaire, ou en forme d'ellipse, notamment circulaire, et/ou légèrement conique.

Cette nappe à tiges 1 est ensuite convoyée (notamment par l'intermédiaire d'un rouleau de renvoi) dans un premier interstice 2 (interstice préalable) formé entre un rouleau 3 de support (rouleau de support préalable) et un premier rouleau 4 de pressage (rouleau de pressage préalable).

Les deux rouleaux ont sensiblement le même diamètre.

Tel que vu à la figure 1, le rouleau 3 dé support tourne à une vitesse de rotation dans le sens inverse des aiguilles d'une montre, de manière à entraîner la nappe 1. Le rouleau 4 de pressage tourne dans le sens opposé. Il pourrait également tourner dans le même sens. L'interstice 2 entre les deux rouleaux a une épaisseur constituée par la plus petite distance mesurée entre les deux rouleaux suivant une ligne passant par leurs centres respectifs qui est réglée pour être inférieure à la hauteur cumulée de la bande 5 de la nappe et d'une tige 6 de la nappe à tiges convoyée en amont de cet interstice.

Le rouleau 4 de pressage préalable est chauffé à une température supérieure à la température du rouleau de support qui, lui, est de préférence maintenu à température ambiante. Notamment, lorsque la matière thermoplastique est une polyoléfine, le rouleau 4 de pressage préalable est chauffé à une température comprise entre 110 et 165°C. Cette température doit être inférieure à la température de fusion de la matière thermoplastique qui passe entre les deux rouleaux et qui forme la nappe à tiges.

La vitesse de rotation du rouleau 4 de pressage préalable et la vitesse du rouleau 3 de support préalable sont choisie pour que la vitesse V1, mesurée dans la direction de convoyage de la nappe au niveau de l'interstice préalable, du rouleau de pression soit différente de la vitesse V2, mesurée dans la même direction de convoyage au niveau de l'interstice(c'est à dire tangentiellement aux deux rouleaux au niveau où ils forment l'interstice), du rouleau de support.

En particulier, dans le mode de réalisation représenté, la vitesse V1 est supérieure à V2, notamment de 5 à 20% supérieure, la vitesse V2 pouvant notamment être comprise entre 5 et 15m/min. Lorsque les deux vitesses sont dirigées dans des sens opposés, on les mesure dans le sens de V2, V1 ayant alors négative et donc inférieure à V2.

A la sortie du premier interstice 2 entre les deux rouleaux 3 et 4 préalables, la nappe à tiges devient une nappe à éléments d'accrochage ou préformes comportant une base 5 et des éléments d'accrochage 6' constitués d'une tige 7 et d'une tête 8. La tête 8 fait saillie de la tige dans la direction avant par rapport à la direction de convoyage. La nappe, toujours supportée par le rouleau 3 de support, est convoyée dans un second interstice 10.

Cet interstice 10 s'étend le long de la périphérie circulaire du rouleau 3, sur un arc de cercle d'une longueur de 200 mm.

Cet interstice est formée entre d'une part un tronçon de la surface extérieure du rouleau 3 de support et d'autre part une surface incurvée 11 circulaire en coupe transversale (plan de la figure) d'un élément de pressage 12. L'interstice s'étend entre un point E d'entrée et un point D de sortie. L'épaisseur de l'interstice, c'est à dire la distance entre les deux surfaces en regard, à savoir la surface 11 et le tronçon 30 de la surface extérieure du rouleau 3 décroît du point E au point D, c'est à dire décroît dans la direction dans laquelle est convoyée la bande. L'épaisseur est mesurée dans la direction radiale (perpendiculaire à la tangente) de la surface extérieure du rouleau 3. Elle est d'environ 1 mm à l'entrée et d'environ 0,4 mm à la sortie. Sur une première longueur B de l'interstice 10, l'épaisseur est supérieure à la hauteur cumulée de la bande 5 et d'une préforme 6' sortant du premier interstice. Après cette première longueur, pendant laquelle la nappe et les préformes sont préchauffées, la nappe entre dans une deuxième longueur C dont l'épaisseur est égale puis inférieure à la hauteur cumulée de la bande 5 et d'une préforme 6', de sorte qu'un contact a lieu avec la surface 11, contact dont la pression croît au fur à mesure que l'on se rapproche de la sortie D. Sur cette longueur C, la forme définitive de la tête est réalisée.

L'élément de pressage 12 est fixe (vitesse de déplacement nulle). Il pourrait également être mobile, cependant toujours de telle sorte que sa vitesse soit moindre que V2 lorsqu'on la mesure dans la direction de V2.

Les concavités des surfaces 11 et 30 en regard sont tournées dans la même direction à savoir vers le centre du rouleau 3 de support. A la limite, l'une ou l'autre de ces deux surfaces ou les deux surfaces sont rectilignes ou sensiblement rectilignes.

Les éléments, notamment de pressage, sont en général en matière métallique, notamment dure. Ils peuvent cependant également être en d'autre matériaux pouvant supporter des températures de l'ordre de 160°C.

De même le rouleau de support est en métal. Il peut cependant également être en tout autre matériau supportant des température de l'ordre de 40° (caoutchouc, thermoplastique, etc..).

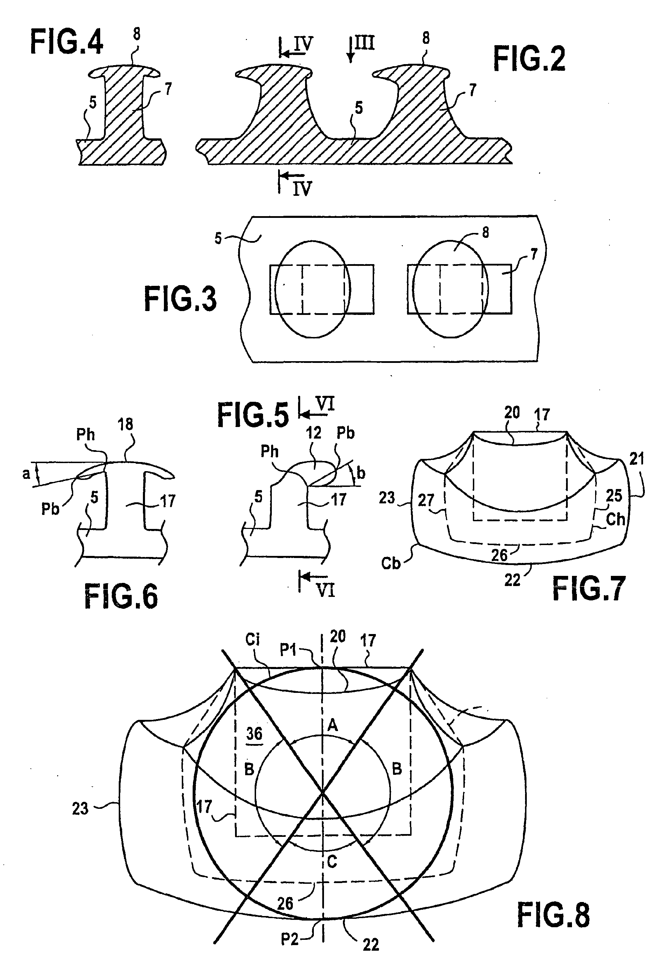

A la figure 2, il est représenté une vue en coupe longitudinale, c'est-à-dire dans un plan qui est à la fois parallèle à la direction MD (Machine Direction) et perpendiculaire au plan de base de la nappe, d'une nappe à préforme à la sortie du premier interstice préalable entre les deux rouleaux 3 et 4 de support et de pressage préalables. Une préforme 6' issue de la base 5 de la nappe dans la direction verticale ou perpendiculaire par rapport à la base est constitué d'une tige 7 dont la section transversale, c'est-à-dire dans un plan parallèle à la base 5, est sensiblement constante ou strictement décroissante vers son sommet et jusqu'à son sommet (c'est le cas représenté aux figures). Cette tige 7 est prolongée à son extrémité supérieure ou sommet par une partie 8 de tête qui fait saillie latéralement de la tige 7. Dans la vue en coupe longitudinale représentée à la figure 2, qui est une coupe sensiblement médiane de la préforme, la partie 8 de tête fait saillie du côté avant (à gauche à la figure) de la direction machine et ne fait pas saillie du côté arrière (ou côté droit à la figure), et notamment du côté arrière n'a pas de capacité d'accrochage. La partie 8 de tête a, vue de dessus comme à la figure 3, une surface supérieure ayant en section sensiblement une forme ovale ou elliptique. Elle fait saillie de la tige sur une majeure partie du tour de la tige, à l'exception d'une partie arrière qui s'étend sur un arc du pourtour de la tige correspondant à environ 25% du pourtour total de la tête. Ce pourcentage peut, suivant l'invention varier de 15% à 50%. Cela correspond, dans le cas d'une tête circulaire à une section angulaire comprise entre environ 50° et 170°, notamment 90° environ.

La partie de la tête qui ne fait pas saillie se trouve dans ce mode de réalisation à l'extrémité arrière, le rouleau de pressage préalable tournant plus vite que le rouleau de support.

A la figure 4, il est représenté l'une des préformes de la figure 2 suivant une vue en coupe dans la direction transversale (CD). La partie 8 de tête fait saillie des deux côtés gauche et droit de la tige d'une distance qui est ici sensiblement égale. La distance mesurée dans la direction CD de laquelle la partie 8 de tête fait saillie des côtés gauche et droit dans le sens CD (Cross Direction) par rapport à la tige 7 est croissante du côté arrière de la tige où elle est nulle en allant jusqu'au côté avant de la tige où elle est maximale.

En section transversale, la tige peut avoir une section rectangulaire, carrée, polygonale, circulaire, ovale ou analogue. De préférence, comme représenté aux figures, elle est rectangulaire en ayant un rapport de sa longueur sur sa largeur qui est compris de préférence entre 1 et 2. En particulier sa longueur est orientée dans la direction MD et sa largeur est orientée dans la direction CD.

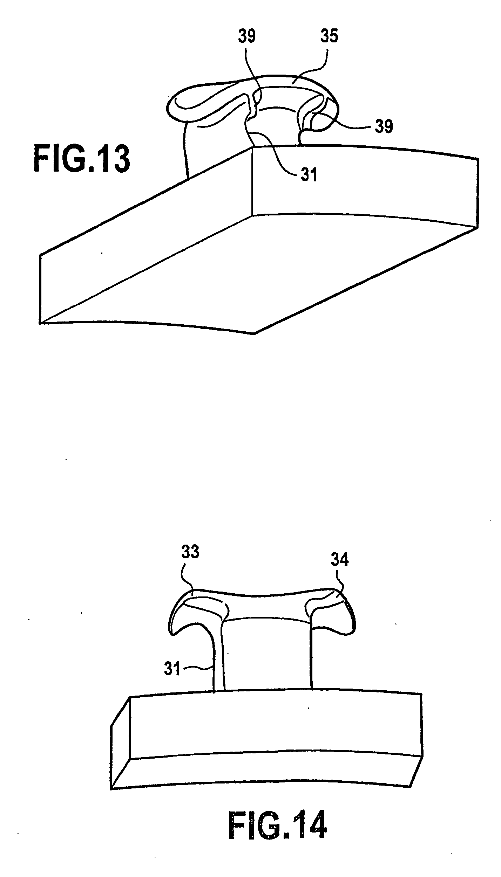

Aux figures 5 à 9 et 11 à 15, il est représenté la nappe à éléments d'accrochage telle qu'obtenue à la sortie de l'interstice 10. Chaque élément d'accrochage est constituée d'une partie de tige 17 ayant une section transversale (c'est à dire perpendiculairement à la direction dans laquelle s'étend l'axe de la tige, direction qui dans ce mode de réalisation est verticale, sachant qu'il est tout à fait envisageable dans le cadre de la présente invention que cet axe de la tige soit incliné par rapport à la verticale) qui est constante ou décroissante. Une partie de tête 18 de l'élément d'accrochage fait saillie latéralement de la partie de tige 17.

Dans le cadre de la présente invention, un crochet, champignon ou élément d'accrochage comporte deux parties, à savoir une partie de tige et une partie de tête qui fait saillie latéralement de la tige. On définit ci dessous le plan de délimitation entre la tête et la tige qui est tel que la tête et la tige sont chacun d'un côté de ce plan.

Pour déterminer ce plan, on définit pour la tige l'arête arrière et l'arête avant, qui sont les lignes comportant les points de la surface extérieure de la tige qui sont les plus à l'arrière, respectivement les plus à l'avant de la tige.

Pour l'arête arrière, on définit le point M2 comme étant le point de l'arête à partir duquel, lorsque l'on se déplace le long de l'arête arrière du bas de la tige (au niveau de la base) vers le haut, la ligne formant l'arête commence à avoir une forme incurvée, notamment orientée dans une direction vers l'arrière par rapport à la partie de l'arête qui se trouve sous ce point M2, sachant qu'avant ce point M2 de délimitation, l'arête arrière est en général soit verticale (tige cylindrique) soit inclinées vers l'avant (tige conique).

Pour l'arête avant, du côté opposé au côté arrière, on définit le point M1 correspondant à l'endroit où l'arête avant commence à avoir une forme incurvée, sachant qu'avant ce point l'arête avant est en général de forme rectiligne verticale ou inclinée vers l'arrière.

Le plan de délimitation est alors le plan comportant la droite M1M2 et perpendiculaire et parallèle à la direction CD.

Par exemple dans le cas où la section transversale de la tige est rectangulaire ou carrée et comporte donc quatre coins, on définit deux points avant et deux points arrière de délimitation de la tête qui se trouvent sur les arêtes respectives de la tige.

A l'avant, du côté opposé au côté arrière, les deux points correspondent à l'endroit où les arêtes avants commencent à avoir une forme incurvée, après avoir eu une forme rectiligne verticale ou inclinée vers l'arrière.

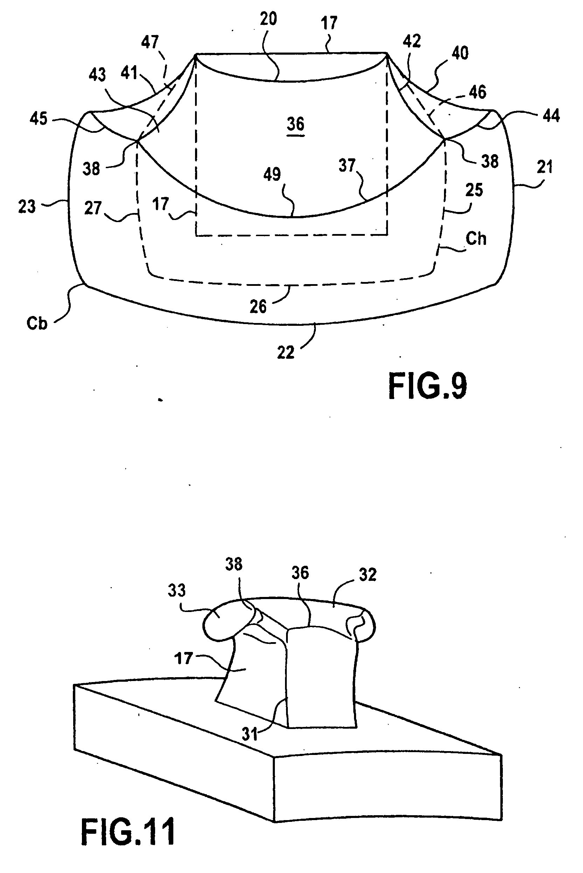

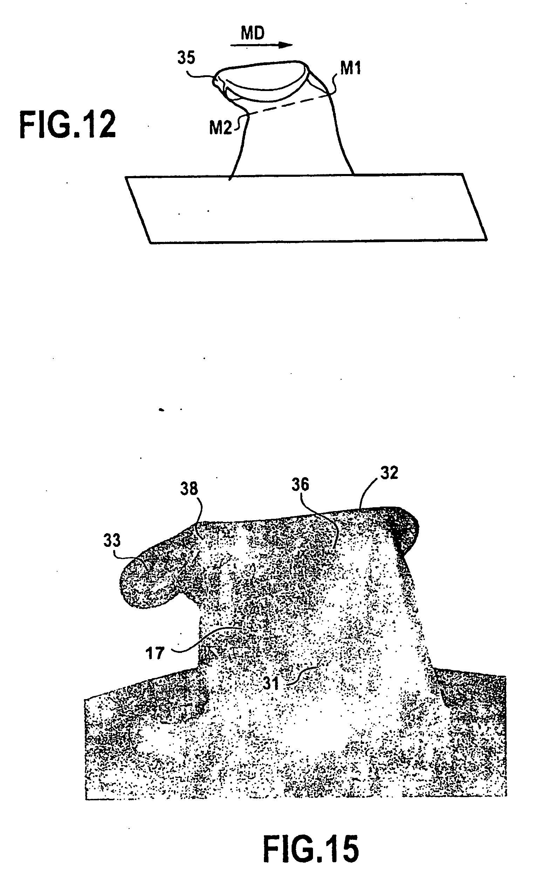

Ainsi, à titre d'exemple, dans le mode de réalisation des figures 11 à 14, il a été représenté, comme on peut le voir à la figure 12, la droite M1M2 qui est inclinée vers le bas et vers l'arrière, notamment d'un angle d'environ 10° et qui est en général compris entre 1° et 20°. Dans le cas représenté, les point M1 et M2 sont doubles car il y a deux arêtes de chaque côté (une arête par coin du rectangle ou carré formant la section de la tige).

Dans chaque plan en coupe longitudinal du crochet, on définit une courbe correspondant à la surface inférieure de la tête qui fait saillie de la tige à droite et à gauche de la tige dans le plan. Chaque courbe à droite et à gauche comporte un point Ph le plus haut et un point Pb le plus bas respectivement à gauche ou à droite du point le plus haut.

Comme indiqué plus haut on définit le prononcé du crochet, champignon ou élément d'accrochage dans un demi plan de coupe longitudinal radial donné comme étant l'angle entre l'horizontale ou le plan de base de la nappe dont est issu l'élément d'accrochage et la droite passant par les deux points Pb et Ph. Plus l'angle est grand, plus le prononcé de la tête dans le plan donné est grand. On définit le bord périphérique extérieur de la tête comme étant la courbe Cb comportant l'ensemble des points Pb.

Comme on le voit aux figures 4 et 5, l'angle d'accrochage le plus grand à gauche ou à droite (les deux ailes sont symétriques) est égal à a et est strictement positif, la droite PhPb représentée étant inclinée vers le bas dans le demi plan gauche radial de la figure 6 tandis que l'angle d'accrochage le plus grand arrière b représenté à la figure 5 est négatif (la droite PhPB représentée étant inclinée vers le haut dans le demi plan arrière radial de la figure 5) et est donc plus petit que l'angle a.

Comme on le voit à la figure 7 ou de manière agrandie à la figure 9, la courbe Cb, qui correspond au bord extérieur de la tête, comporte un segment incurvé 20 avant, un segment 40 intermédiaire droit, un segment 41 intermédiaire gauche, un segment incurvé 21 latéral droit, un segment 22 incurvé arrière et un segment 23 incurvé latéral gauche.

De même la courbe Ch (en pointillé à la figure 9) comporte un segment incurvé 20 avant (identique au segment incurvé avant de la courbe Cb, puisque la tête le long de ce tronçon ne fait pas saillie de la tige), un segment 46 intermédiaire droit, un segment incurvé 25 latéral droit, un segment 26 incurvé arrière, un segment 27 incurvé latéral gauche et un segment intermédiaire 47 gauche.

Ces segments 20 à 27 et 40, 41, 46 et 47 peuvent être approximés par des arcs de cercle.

La concavité du segment 20 avant est tournée vers l'avant. La concavité du segment 22 arrière est tournée vers l'avant. Les concavités des segments 21, 22, 23, 25, 26, 27 sont tournées vers la tige.

La concavité des segments intermédiaire 40 à 47 est tournée vers l'extérieur de l'élément.

La zone délimitée par respectivement les segments 40 et 42 et 41 et 43 a une surface concave dont la concavité est tournée vers l'extérieur de l'élément.

La concavité du segment 26 arrière est tournée vers l'avant. Les concavités des segments 25 et 27 sont tournées vers la tige en se faisant face.

La courbure du segment 26 est plus petite que celle du segment 22 (le rayon de courbure du segment 26 est plus grand que celui du segment 22).

La courbure du segment 21 est plus grande que celle du segment 25 (le rayon de courbure du segment 21 est plus petit que celui du segment 25).

La courbure du segment 23 est plus grande que celle du segment 27 (le rayon de courbure du segment 23 est plus petit que celui du segment 27).

Sensiblement tout le long du segment 22, et notamment en son point central ou le plus en arrière, le prononcé de la tête est sensiblement égal à zéro.

Sur sensiblement tout le segment 23 (respectivement 21) le prononcé de la tête est plus grand que le plus grand prononcé de la tête sur le segment arrière.

On a ainsi sur les zones latérales de la tête de l'élément d'accrochage un grand prononcé qui va permettre d'assurer une très bonne tenue en traction d'une boucle et sur les zones frontales des faibles prononcés permettant à la boucle d'être guidée facilement pour aller coopérer avec les ailes latérales de la tête.

En outre, entre le segment 20 et respectivement les segments 21 et 23 s'étendent deux segments 40 et 41 intermédiaires.

Aux figures 11 à 14, il est représenté diverses vues en perspective du mode de réalisation des figures 5 à 7.

L'élément d'accrochage comporte une partie de tige 17 de section transversale (parallèlement à la bande de base dont est issu l'élément d'accrochage) rectangulaire ou carrée, comportant quatre coins. Ainsi le long de l'extension en hauteur de la tige 17, quatre arêtes 31 s'étendent vers la haut à partir de la base sensiblement jusqu'à la hauteur à partir de laquelle s'étend la partie 32 de tête de l'élément d'accrochage. La section transversale de la tige a une aire rectangulaire ou carrée qui décroît de la base jusqu'à la hauteur où commence la partie de tête. Elle pourrait également être constante.

De deux côtés opposés dans la direction CD (axe de vue de la figure 12) la tête comporte deux ailes 33, 34, dont les bords extérieurs correspondent aux segments 21 et 23. Du côté avant dans la direction MD (indiquée à la figure 12) la tête ne fait pas saillie de la tige. Du côté arrière dans la direction MD (à gauche à la figure 12) la tête comporte un partie 35 avancée dont le bord extérieur correspond au tronçon 22.

La prononciation de l'accrochage ou angle d'accrochage des ailes en le point le plus éloigné de la tige dans la direction CD est supérieur à l'ensemble des prononcés d'accrochage de la partie en avancée.

La surface supérieure de la tête comporte du côté arrière une région 36 concave, dont la concavité est tournée dans une direction qui s'éloigne de l'élément d'accrochage, notamment vers le haut. Cette région concave est délimitée à l'arrière par une ligne de crête 37 et vers l'avant par la tige, notamment par le tronçon 20.

La ligne 37 de crête est constituée d'un tronçon droit 42, d'un tronçon central et d'un tronçon gauche 43. Les deux tronçons 42 et 43 droit et gauche s'étendent du point de jonction du tronçon 20 et respectivement des tronçons 40 et 41 intermédiaire droit et gauche jusqu'à deux points 38 sommet droit et gauche respectif entre lesquels s'étend le tronçon central de la ligne de crête. Ce tronçon central comporte un point central 49 le plus vers l'arrière.

En outre, deux lignes de crête intermédiaire 44 et 45 droite et gauche relie les extrémité avant des bords ou tronçons 21 et 23 des ailes droite et gauche aux deux points sommets 38 droit et gauche respectif.

La surface extérieure de la tête comporte outre la surface concave 36 deux surfaces concaves auxiliaire droite et gauche à concavité tournée vers l'extérieur et qui sont délimitées respectivement par les tronçons 40, 42, 44 et 41, 43, 45.

Les deux points 38 sommet sont les deux points de la surface supérieure de l'élément d'accrochage les plus élevés. La présence de ces deux points 38 sommet les plus élevés a pour avantage qu'ils vont guider les boucles destinées à venir coopérer avec l'élément d'accrochage, soit vers l'élément d'accrochage immédiatement suivant vers l'avant, soit vers les ailes 33, 34 de sorte que les boucles sont particulièrement bien accrochées aux éléments d'accrochage et on obtient un auto agrippant mâle femelle ayant une excellente résistance à la traction et/ou au pelage.

Du côté de l'avancée 35, deux nervures 39 s'étendent à partir des extrémités supérieures des arêtes 31 arrières de la tige jusqu'au bord 20 extérieur (lieu des points Pb) de la tête. Ces nervures ont la forme d'un épaississement ayant une ligne de crête en continuité avec les arêtes 31 arrières. Elles s'étendent jusqu'au bord extérieur de la tête, en deux points qui se trouvent du côté arrière dans la direction MD en étant décalés latéralement par rapport à la tige dans la direction CD. Ces deux nervures donnent à l'élément d'accrochage une plus grande résistance à la traction et/ou au pelage, lors de sa coopération avec des boucles.

De l'autre côté de la ligne 37 de crête par rapport à la région 36 concave, c'est à dire du côté arrière dans la direction MD, la surface supérieure de la tête est convexe ayant sa convexité tournée vers le haut, la région étant délimité par le bord extérieur arrière de l'avancée, par les bords extérieurs des deux ailes, par la partie de la ligne 37 de crête qui s'étend entre les deux points 38 sommet et par les deux tronçons 44 et 45 intermédiaires de crête.

Les deux ailes 33, 34 ont un bord extérieur (lieu des points Pb) qui a la forme d'une courbe incurvée (il s'agit des tronçons 21 et 23) convexe dont la convexité est tournée dans le sens qui s'éloigne de l'élément d'accrochage dans la direction CD.

Pour chaque aile, l'angle de prononciation d'accrochage est croissant à partir des points Pb se trouvant en dessous des points d'extrémité 38 en allant vers l'arrière dans la direction MD. Cette croissance de l'angle de prononciation a lieu jusqu'à un point intermédiaire correspondant sensiblement au point de la courbe incurvée convexe du bord de l'aile qui est le plus éloigné de la tige. Ensuite, cette prononciation diminue jusqu'aux nervures 39 où le bord extérieur cesse d'être celui des ailes pour devenir celui de l'appendice qui a un angle de prononciation sensiblement nul.

Suivant un mode de réalisation préféré de l'invention
- la bande de base a une épaisseur comprise entre 0,05 mm et 0,5 mm.
- la tige a une hauteur, mesurée de la base jusqu'au sommet le long de la perpendiculaire à la base qui est compris entre 0,1 mm et 2,5 mm.
- la tête fait saillie de la tige du côté arrière, mesurée dans la direction MD, d'une distance f comprise entre 0,5% et 100% de la dimension de la section de la tige dans cette direction.
- dans la direction CD, la tête fait saillie d'une distance, mesurée dans la direction CD, au niveau de l'extrémité arrière de la tige d'une distance maximale e comprise entre 50% et 500% de la dimension de la section transversale de la tige dans cette direction.

On définit le cercle Ci inscrit dans la tête comme étant le cercle dont le centre O1 se trouve à mi distance entre le point extrême avant P1 dans la direction MD en vue de dessus de l'élément d'accrochage(c'est à dire le point de la surface supérieure de la tête le plus à l'avant dans la direction MD) et le point extrême arrière P2 dans la direction MD en vue de dessus de l'élément d'accrochage (c'est à dire le point de la surface supérieure de la tête le plus à l'arrière dans la direction MD) sur la droite passant par ces deux points et dont le rayon est égale à cette mi distance.

De préférence, les bords périphériques extérieurs des ailes gauches et droite s'étendent chacun sur une longueur qui correspond à un arc B de cercle sur le cercle Ci qui est égal à la figure 8 à environ 100° et qui peut être compris en général entre 60° et 140°. Le bord périphérique extérieur de la partie en avancée s'étend sur une longueur qui correspond à un arc C de cercle sur le cercle Ci qui est égal à la figure 8 à environ 80° et qui peut être compris en général entre 40° et 120°. Enfin Le bord périphérique extérieur le long duquel la tête ne fait pas saillie de la tige s'étend sur une longueur qui correspond à un arc A de cercle sur le cercle Ci qui est égal à la figure 8 à environ 80° et qui peut être compris en général entre 40° et 120°.

## Revendications

1. Nappe à éléments d'accrochage, comportant une bande (5) de base, notamment en matière thermoplastique, et au moins un élément d'accrochage issu de la bande, l'élément d'accrochage étant constitué d'une partie (17) de tige et d'une partie de tête (18) faisant saillie latéralement de la tige, la tête comportant deux ailes (33, 34) gauche et droite faisant saillie latéralement de la tige dans une direction transversale, ou CD, en ayant respectivement un angle d'accrochage (a) le plus grand gauche et droit ; et d'autre part, radialement entre les deux ailes, une partie arrière (35) en avancée faisant saillie de la tige du côté arrière dans une direction MD perpendiculaire à la direction CD en ayant un angle d'accrochage (b) le plus grand arrière, **caractérisée en ce que** les deux angles (a) d'accrochage le plus grand gauche et droit sont supérieurs à l'angle (b) d'accrochage le plus grand arrière.

2. Nappe suivant la revendication 1, **caractérisée en ce que** la tête (18), sur une partie avant, c'est à dire du côté opposé à la partie (35) en avancée, ne fait pas saillie latéralement de la tige.

3. Nappe suivant l'une des revendications 1 ou 2, **caractérisée en ce que** la tige (17) a une forme en section transversale sensiblement rectangulaire.

4. Nappe suivant la revendication 3, **caractérisée en ce que** la tête (18) comporte deux excroissances en forme de nervures (39) qui s'étendent à partir des arêtes (31) de la tige formées par ses coins arrières du côté de la partie en avancée jusqu'au sommet de celle-ci.

5. Nappe suivant la revendication 4, **caractérisée en ce que** chaque nervure (39) a une crête en continuité avec l'arête (31) respective de la tige à partir de laquelle elle s'étend.

6. Nappe suivant l'une des revendications 3 à 5, **caractérisée en ce que** le plan (M1M2) de délimitation entre la tête et la tige est incliné vers le bas dans la direction vers l'arrière par rapport au plan de la base (5).

7. Nappe suivant l'une des revendications 1 à 6, **caractérisée en ce que**, du côté opposé à la partie en avancée, la surface supérieure de la tête (18) comporte une région (36) concave dont la concavité est tournée dans une direction qui s'éloigne de l'élément d'accrochage, cette région concave étant délimitée à l'arrière par une ligne (37) de crête et vers l'avant par le plan de délimitation tige-tête.

8. Nappe suivant la revendication 7, **caractérisée en ce que** la ligne (37) de crête comporte deux points (38) sommet droit et gauche qui sont les deux points les plus élevés de la tête respectivement à droite et à gauche de l'axe avant - arrière de la tête (18) passant par l'axe de la tige (17).

9. Nappe suivant la revendication 8, **caractérisée en ce que** les deux points (38) sont plus proches du bord avant que du bord arrière.

10. Nappe suivant l'une des revendications 5 à 9, **caractérisé en ce que** de l'autre côté de la ligne (37) de crête par rapport à la région (36) concave, c'est à dire du côté arrière dans la direction MD, la surface supérieure de la tête est convexe ayant sa convexité tournée vers le haut, la région étant délimité par le bord extérieur arrière de l'avancée, par les bords extérieurs des deux ailes, par la partie de la ligne (37) de crête qui s'étend entre les deux points (38) sommet et par deux tronçons (44) et (45) intermédiaires de crête.

11. Procédé pour fabriquer une nappe à éléments d'accrochage suivant l'une des revendications 1 à 10, comportant les étapes dans lesquelles:
on convoie une nappe à préformes comportant une bande (5) de base et au moins une préforme (6') faisant saillie transversalement, notamment sensiblement perpendiculairement, de la nappe, la au moins une préforme étant par exemple une ou des tiges cylindriques circulaires ou coniques;
on fait passer cette nappe à préformes dans un interstice (E-D) formé entre une surface (11) de support incurvée ou droite d'un élément de support, notamment un rouleau de support, le support étant tel que la nappe est en contact avec la surface de support par son côté sans préforme, et une surface de pressage incurvée ou droite d'un élément de pressage (12), les concavités des deux surfaces étant tournées dans la même direction, l'interstice ayant une épaisseur d'entrée et une épaisseur de sortie inférieure à l'épaisseur d'entrée, la surface de support entraînant la nappe à préforme à une vitesse d'entraînement tandis que la surface de pressage est fixe ou se déplace à une vitesse inférieure à la vitesse d'entraînement ;
la hauteur totale constituée de la somme de l'épaisseur de la bande (5) de base et de la hauteur de chaque préforme (6') étant supérieure à l'épaisseur en un point situé entre l'entrée et la sortie, ce point pouvant être l'entrée, et l'épaisseur de l'interstice étant décroissante de ce point vers la sortie, notamment jusqu'à la sortie, de sorte que les préformes sont déformées par compression croissante vers la sortie pour ainsi obtenir une nappe à éléments d'accrochage.

12. Procédé suivant la revendication 11, **caractérisé en ce que** la nappe à préformes convoyée dans l'interstice est obtenue en convoyant une nappe à tiges comportant une bande (5) de base et des tiges (6) faisant saillie transversalement, notamment sensiblement perpendiculairement, de la nappe en étant notamment de forme cylindrique, notamment circulaire ou conique, entre un élément de support préalable, notamment un rouleau de support (3) préalable, et un élément de pressage préalable, notamment un rouleau (4) de pressage préalable;
un interstice (2) préalable étant formé entre les deux éléments préalables de support et de pressage de sorte que les tiges (6) sont comprimées par l'élément de pressage préalable contre le support préalable de sorte qu'à la sortie de l'interstice préalable on obtient ladite nappe à préformes comportant une nappe (5) et des préformes (6') qui ont à leur extrémité une partie (7) de tête qui fait saillie latéralement, la hauteur des préformes (6') étant inférieure à la hauteur des tiges (6) en amont de l'interstice préalable entre les deux éléments de support et de pressage préalables;
l'élément de support préalable se déplaçant à une première vitesse (V₁) mesurée dans la direction de convoyage de la nappe au niveau de l'interstice préalable et l'élément de pression se déplaçant à une deuxième vitesse (V₂) mesurée dans la direction de convoyage de la nappe au niveau de l'interstice préalable, les deux vitesses ayant le même sens mais étant différentes l'une de l'autre.

13. Installation destinée à fabriquer une nappe à éléments d'accrochage suivant l'une des revendications 1 à 10, comportant un premier élément de support, notamment un rouleau (3), ayant une surface de support incurvée ou droite et un élément (12) de pressage ayant une surface de pressage incurvée ou droite, les deux surfaces de support et de pressage étant disposées en ayant leur concavité tournée dans la même direction et de manière à former un interstice (E-D) entre elles, et des moyens destinés à convoyer une nappe à préformes pour la faire passer dans l'interstice entre les deux éléments de sorte que la nappe soit supportée par son côté sans préforme, l'interstice s'étendant entre une entrée et une sortie, et au moins sur un tronçon, de préférence entre l'entrée et la sortie, l'épaisseur de l'interstice est décroissante vers la sortie ; la surface de support entraînant la nappe à une vitesse d'entraînement tandis que la surface de pressage se déplace à une vitesse nulle ou inférieure à la vitesse d'entraînement.

## Claims

1. Sheet having fastening elements, comprising a base strip (5), in particular made of thermoplastic material, and at least one fastening element made from the strip, the fastening element consisting of a stem part (17) and a head part (18) protruding laterally from the stem, the head comprising two left and right wings (33, 34) protruding laterally from the stem in a transverse direction, or CD, respectively having a fastening angle (a) which is the greatest to the left and right; and on the other hand, radially between the two wings, a rear projecting part (35) protruding from the stem on the rear side in a direction MD perpendicular to the direction CD, having a fastening angle (b) which is the greatest to the rear, **characterised in that** the two fastening angles (a) which are the greatest to the left and right are greater than the fastening angle (b) which is the greatest to the rear.

2. Sheet according to Claim 1, **characterised in that** the head (18), on a front part, i.e. on the side opposing the projecting part (35), does not protrude laterally from the stem.

3. Sheet according to one of Claims 1 or 2, **characterised in that** the stem (17) has a substantially rectangular shape in cross section.

4. Sheet according to Claim 3, **characterised in that** the head (18) comprises two protuberances in the form of ribs (39) which extend from edges (31) of the stem formed by its rear corners on the side of the projecting part as far as the apex thereof.

5. Sheet according to Claim 4, **characterised in that** each rib (39) has a ridge continuing from the respective edge (31) of the stem from which it extends.

6. Sheet according to one of Claims 3 to 5, **characterised in that** the defining plane (M1M2) between the head and the stem is inclined downwards in the direction towards the rear relative to the plane of the base.

7. Sheet according to one of Claims 1 to 6, **characterised in that** on the side opposing the projecting part, the upper surface of the head (18) comprises a concave region (36) of which the concavity is turned in a direction which is away from the fastening element, this concave region being defined to the rear by a ridge line (37) and to the front by the stem-head defining plane.

8. Sheet according to Claim 7, **characterised in that** the ridge line (37) comprises two right and left apex points (38) which are the two highest points of the head respectively to the right and to the left of the front - rear axis of the head (18) passing through the axis of the stem (17).

9. Sheet according to Claim 8, **characterised in that** the two points (38) are closer to the front edge than the rear edge.

10. Sheet according to one of Claims 5 to 9, **characterised in that** on the other side of the ridge line (37) relative to the concave region (36) i.e. on the rear side in the direction MD, the upper surface of the head is convex, having its convexity turned upwards, the region being defined by the rear external edge of the projection, by the external edges of the two wings, by the part of the ridge line (37) which extends between the two apex points (38) and by two intermediate ridge sections (44) and (45).

11. Method for manufacturing a sheet having fastening elements according to one of Claims 1 to 10, comprising the steps in which:
a sheet having preforms is conveyed comprising a base strip (5) and at least one preform (6') protruding transversely, in particular substantially perpendicular, from the sheet, the at least one preform being, for example, a circular or conical cylindrical stem or stems;
said sheet having preforms is passed into an interstice (E-D) formed between a curved or straight support surface (11) of a support element, in particular a support roller, the support being such that the sheet is in contact with the support surface by its side without preforms, and a curved or straight pressing surface of a pressing element (12), the concavities of the two surfaces being turned in the same direction, the interstice having an inlet thickness and an outlet thickness which is less than the inlet thickness, the support surface driving the sheet having preforms at a driving speed whilst the pressing surface is fixed or is displaced at a speed less than the driving speed;
the total height consisting of the sum of the thickness of the base strip (5) and of the height of each preform (6') being greater than the thickness at a point located between the inlet and the outlet, this point being able to be the inlet and the thickness of the interstice decreasing from this point to the outlet, in particular as far as the outlet, such that the preforms are deformed by increasing compression towards the outlet, to obtain thus a sheet having fastening elements.

12. Method according to Claim 11, **characterised in that** the sheet having preforms conveyed into the interstice is obtained by conveying a sheet having stems comprising a base strip (5) and stems (6) protruding transversely, in particular substantially perpendicular, from the sheet, being in particular of cylindrical shape, in particular circular or conical, between a preliminary support element, in particular a preliminary support roller (3) and a preliminary pressing element, in particular a preliminary pressing roller (4) ;
a preliminary interstice (2) being formed between the two preliminary support and pressing elements such that the stems (6) are compressed by the preliminary pressing element against the preliminary support such that at the outlet of the preliminary interstice said sheet having preforms is obtained, comprising a sheet (5) and preforms (6') which have at their end a head part (7) which protrudes laterally, the height of the preforms (6') being less than the height of the stems (6) upstream of the preliminary interstice between the two preliminary support and pressing elements;
the preliminary support element being displaced at a first speed (V₁) measured in the direction of conveyance of the sheet in the region of the preliminary interstice and the pressing element being displaced at a second speed (V₂) measured in the direction of conveyance of the sheet in the region of the preliminary interstice, the two speeds being in the same direction but different from one another.

13. Installation intended for manufacturing a sheet having fastening elements according to one of Claims 1 to 10, comprising a first support element, in particular a roller (3), having a curved or straight support surface and a pressing element (12) having a curved or straight pressing surface, the two support and pressing surfaces being arranged having their concavity turned in the same direction so as to form an interstice (E-D) therebetween, and means intended to convey a sheet having preforms to make it pass into the interstice between the two elements such that the sheet is supported by its side without preforms, the interstice extending between an inlet and an outlet, and at least over one portion, preferably between the inlet and the outlet, the thickness of the interstice decreasing to the outlet; the support element driving the sheet at a driving speed whilst the pressing surface is displaced at zero speed or at a speed which is less than the driving speed.

## Patentansprüche

1. Lage mit Befestigungselementen, die eine Basislage (5), insbesondere aus einem thermoplastischen Material, und mindestens ein aus der Lage hervorgehendes Befestigungselement aufweist, wobei das Befestigungselement aus einem Schaftteil (17) und einem Kopfteil (18) das seitlich von dem Schaft vorspringt, besteht, wobei der Kopf zwei Flügel, einen linken und einen rechten, (33, 34) aufweist, die seitlich von dem Kopf in einer Querrichtung, oder CD, vorstehen, wobei sie einen größten linken bzw. rechten Befestigungswinkel (a) aufweisen; und wobei der Kopf andererseits radial zwischen den beiden Flügeln ein hinteres Vorsprungteil (35)aufweist, das von dem Schaft auf der hinteren Seite in einer zur Richtung CD senkrechten Richtung MD vorsteht, wobei es einen größten hinteren Befestigungswinkel (b) aufweist, **dadurch gekennzeichnet, dass** der größte linke und der größte rechte Befestigungswinkel (a) größer als der größte hintere Befestigungswinkel (b) sind.

2. Lage nach Anspruch 1, **dadurch gekennzeichnet, dass** der Kopf (18) in einem vorderen Teil, d.h. auf der zum Vorsprungteil (35) entgegengesetzten Seite, nicht seitlich von dem Schaft vorsteht.

3. Lage nach einem der Ansprüche 1 oder 2, **dadurch gekennzeichnet, dass** der Schaft (17) eine im Wesentlichen rechteckige Querschnittsform aufweist.

4. Lage nach Anspruch 3, **dadurch gekennzeichnet, dass** der Kopf (18) zwei Auswüchse in Rippenform (39) aufweist, die sich von den Kanten (31) des Schaftes, die durch dessen hintere Keile auf der Seite des Vorsprungteils gebildet werden, bis zum höchsten Punkt desselben erstrecken.

5. Lage nach Anspruch 4, **dadurch gekennzeichnet, dass** jede Rippe (39) einen Kamm in Verbindung mit der jeweiligen Kante (31) des Schafts, von der aus sie sich erstreckt, aufweist.

6. Lage nach einem der Ansprüche 3 bis 5, **dadurch gekennzeichnet, dass** die Abgrenzungsebene (M1M2) zwischen dem Kopf und dem Schaft in der Richtung nach hinten in Bezug auf die Basisebene (5) nach unten geneigt ist.

7. Lage nach einem der Ansprüche 1 bis 6, **dadurch gekennzeichnet, dass** die obere Oberfläche des Kopfs (18) auf der zum Vorsprungteil entgegengesetzten Seite einen konkaven Bereich (36) aufweist, dessen Höhlung in eine Richtung, die sich vom Befestigungselement entfernt, gewandt ist, wobei dieser konkave Bereich nach hinten durch eine Kammlinie (37) und nach vorne durch die Schaft-Kopf-Abgrenzungsebene abgegrenzt ist.

8. Lage nach Anspruch 7, **dadurch gekennzeichnet, dass** die Kammlinie (37) einen rechten und einen linken Gipfelpunkt (38) aufweist, die die beiden höchsten Punkte des Kopfes in Bezug auf rechts und links der Vorder/Hinterachse des Kopfs (18), die durch die Schaftachse (17) geht, sind.

9. Lage nach Anspruch 8, **dadurch gekennzeichnet, dass** die beiden Punkte (38) näher am Vorderrand als am Hinterrand liegen.

10. Lage nach einem der Ansprüche 5 bis 9, **dadurch gekennzeichnet, dass** auf der in Bezug zum konkaven Bereich (36) anderen Seite der Kammlinie (37), d.h. auf der in der MD-Richtung hinteren Seite, die obere Oberfläche des Kopfes konvex ist, wobei deren Wölbung nach oben gewandt ist, wobei der Bereich durch den hinteren Außenrand des Vorsprungs, durch die Außenränder der beiden Flügel, durch den Teil der Kammlinie (37), der sich zwischen den beiden Gipfelpunkten (38) erstreckt, und durch zwei Zwischenkammabschnitte (44) und (45) abgegrenzt ist.

11. Verfahren zur Herstellung einer Lage mit Befestigungselementen nach einem der Ansprüche 1 bis 10, das die folgenden Stufen aufweist, wobei:
eine Lage mit Vorformen bereitgestellt wird, die eine Basislage (5) und mindestens eine Vorform (6'), die quer, insbesondere im Wesentlichen senkrecht von der Lage vorsteht, aufweist, wobei die mindestens eine Vorform beispielsweise ein oder mehrere rundzylindrische oder konische Schäfte sind; diese Lage mit Vorformen durch einen Zwischenraum (E-D) .hindurchgeführt wird, der zwischen einer gekrümmten oder geraden Trägeroberfläche (11) eines Trägerelements, insbesondere einer Trägerwalze, wobei der Träger derart ist, dass die Lage mit der Trägeroberfläche über deren Seite ohne Vorform in Kontakt ist, und einer gekrümmten oder geraden Pressoberfläche eines Presselements (12) ausgebildet ist, wobei die Höhlung bzw. Wölbung der beiden Oberflächen in die gleiche Richtung gewandt ist, der Zwischenraum eine Eingangsdicke und eine gegenüber der Eingangsdicke geringere Ausgangsdicke aufweist, die Trägeroberfläche die Lage mit Vorformen mit einer Transportgeschwindigkeit transportiert, während die Pressoberfläche fest ist oder sich mit einer geringeren Geschwindigkeit als der Transportgeschwindigkeit verschiebt;
die Gesamthöhe, die vom höchsten Punkt der Dicke der Basislage (5) und der Höhe der einzelnen Vorformen (6') gebildet wird, größer als die Dicke an einem zwischen dem Eingang und dem Ausgang gelegenen Punkt, wobei dieser Punkt der Eingang sein kann, ist und die Dicke des Zwischenraums von diesem Punkt in Richtung des Ausgangs, insbesondere bis zum Ausgang, derart abnimmt, dass die Vorformen durch in Richtung des Ausgangs zunehmenden Druck verformt werden, um auf diese Weise eine Lage mit Befestigungselementen zu erhalten.

12. Verfahren nach Anspruch 11, **dadurch gekennzeichnet, dass** die Lage mit Vorformen, die in den Zwischenraum transportiert wird, dadurch erhalten wird, dass eine Lage mit Schäften, die eine Basislage (5) und Schäfte (6), die quer, insbesondere im Wesentlichen senkrecht von der Lage vorspringen, wobei sie insbesondere von zylindrischer Form, insbesondere runder oder konischer Form sind, aufweist, zwischen einem vorhergehenden Trägerelement, insbesondere einer vorgehenden Trägerwalze (3) und einem vorhergehenden Presselement, insbesondere einer vorhergehenden Presswalze (4) transportiert wird;
wobei zwischen den zwei vorhergehenden Träger- und Presselementen ein vorhergehender Zwischenraum (2) derart gebildet wird, dass die Schäfte (6) durch das vorhergehende Presselement gegen den vorhergehenden Träger derart gepresst werden, dass am Ausgang des vorhergehenden Zwischenraums eine Lage mit Vorformen erhalten wird, die eine Lage (5) und .Vorformen (6'), die an deren Ende ein Kopfteil (7), das seitlich vorsteht, aufweisen, aufweist, wobei die Höhe der Vorformen (6') geringer als die Höhe der Schäfte (6) vor dem vorhergehenden Zwischenraum zwischen den beiden vorhergehenden Träger- und Presselementen ist;
wobei sich das vorhergehende Trägerelement mit einer ersten Geschwindigkeit (V₁), die in der Transportrichtung der Lage auf der Höhe des vorhergehenden Zwischenraums gemessen wird, verschiebt und das Druckelement sich mit einer zweiten Geschwindigkeit (V₂), die in der Transportrichtung der Lage auf der Höhe des vorhergehenden Zwischenraums gemessen wird, verschiebt, wobei die beiden Geschwindigkeiten die gleiche Richtung aufweisen, jedoch voneinander verschieden sind.

13. Einrichtung zur Herstellung einer Lage mit Befestigungselementen nach einem der Ansprüche 1 bis 10, umfassend ein erstes Trägerelement, insbesondere eine Walze (3), mit einer gekrümmten oder geraden Trägeroberfläche und ein Presselement (12) mit einer gekrümmten oder geraden Pressoberfläche, wobei die beiden Träger- und Pressoberflächen derart angeordnet sind, dass deren Höhlung bzw. Wölbung in die gleiche Richtung gewandt ist und ein Zwischenraum (E-D) zwischen ihnen gebildet wird, und Mittel zum Transportieren einer Lage mit Vorformen, um diese durch den Zwischenraum zwischen den beiden Elementen derart zu führen, dass die Lage auf deren Seite ohne Vorformen getragen wird, wobei sich der Zwischenraum zwischen einem Eingang und einem Ausgang und mindestens über einen Abschnitt, vorzugsweise zwischen dem Eingang und dem Ausgang, erstreckt, wobei die Dicke des Zwischenraums in Richtung des Ausgangs abnimmt; wobei die Trägeroberfläche die Lage mit einer Transportgeschwindigkeit transportiert, während die Pressoberfläche mit der Geschwindigkeit null oder einer geringeren Geschwindigkeit als der Transportgeschwindigkeit verschoben wird.
